# EUROPEAN PATENT SPECIFICATION

(11) **EP 3 262 910 B1**
(45) Date of publication and mention of the grant of the patent: **11.11.2020**
(21) Application number: 17179216.1
(22) Date of filing: 30.06.2017
(51) Int. Cl.: A01B 29/00, A01B 73/00

(54) **A LAND ROLLER**
ACKERWALZE
ROULEAU BRISE-MOTTES

(30) Priority: 30.06.2016 GB 201611498
(43) Date of publication of application: 03.01.2018
(73) Proprietor: Walter Watson Limited, Castlewellan Down BT31 9JQ (GB)
(72) Inventor: WATSON, Walter, Castlewellan, Down BT31 9JQ (GB)
(74) Representative: Hanna, John Philip

(56) References cited:
- DE-A1- 10 137 407
- FR-A- 558 983
- GB-A- 2 194 872
- GB-A- 2 490 342

## Description

The present invention relates to a land roller and in particular to a land roller being adaptable between a transport position and a working position.

In the working positon, the longitudinal axis of a rolling barrel of the land roller is generally perpendicular to the direction of travel of a towing vehicle when travelling in a straight line, with the rolling barrel in contact with the ground. In the transport position, the longitudinal axis of the rolling barrel of the land roller is generally parallel to the direction of travel of the towing vehicle when travelling in a straight line, with the rolling barrel out of contact with the ground. Land rollers, when in a working position, are by their nature a wide heavy product. Land rollers often require transport on public roads to get to a worksite and so must meet all legislation applying to road transportation of agricultural vehicles. Therefore, the land roller must be moved between the working positon and the transport position, which complies with this legislation, prior to moving the land roller on a public road or lane leading to the worksite.

Land rollers are intentionally heavy, so to move them between a transport position and an in use working position manually requires the farmer or contractor to leave the tractor and physically move the rolling barrel into a working position. Manually, this operation would really require two people as a result of the weight of the land roller and two people are not always available. As a consequence of endless downward pressure on the economic value of farming, the majority of developments in farm machinery in recent times has been focused on increasing machinery automation. This allows a single person to operate most agricultural machinery so as to achieve economic viability. In combination with downward economic pressure on the farming community, the trend for the average age of farmers is on the increase across Europe. The current group of farmers have the oldest average age on record. This means that the capacity to perform heavy lifting, pulling and pushing operations often required during the coupling, decoupling and manoeuvring of farm machinery, prior to and after use has been gradually diminished with an ageing farmer population.

GB 2 490 342 discloses a land roller for rolling land comprising a carriage means for transporting the land roller behind a powered towing vehicle and a rolling barrel assembly operably coupled with the carriage means. The rolling barrel assembly comprising a rolling barrel housed within and movably mounted on a rolling barrel support frame. A towing means is movably coupled together with the rolling barrel support frame, the rolling barrel support frame and the towing means being movable relative to one another by a powered actuation means coupled to a mechanical linkage arrangement for moving the land roller between a transport position and an in use working orientation. The carriage means comprises a wheel support arrangement movably coupled to the rolling barrel support frame and a pair of wheels mounted at or about opposing ends of the wheel support arrangement disposed on opposing sides of the rolling barrel support frame.

GB 2 194 872, DE 101 37 407, and FR 558 983 disclose further land rollers.

It is an object of the present invention to obviate or mitigate the problem of heavy manual work required for adjusting a land roller between a transport position and a working position and for reducing the down time of the land roller before and after rolling.

Accordingly, the present invention provides a land roller for rolling land according to the subject-matter of independent claim 1. Particular embodiments of the invention are defined in dependent claims 2-15.

Advantageously, the land roller can be moved on public roads or on country lanes, which are often narrow, in the transport position and can be moved into the working orientation using the primary powered actuation means when the land roller is towed into a field or worksite where ground is to be rolled.

In the working orientation, the longitudinal axis of the rolling barrel of the land roller is generally perpendicular to the direction of travel of a towing vehicle when the towing vehicle is travelling in a straight line.

Ideally, the rolling barrel support frame and the towing means being movable relative to one another by a primary powered actuation means between a transport position and an in use working orientation via the carriage means.

Preferably, the towing means being operably couplable to the powered towing vehicle.

Ideally, when the towing means is operably coupled to the powered towing vehicle so as to be fixed in position, actuation of the primary powered actuation means moves, and most preferably rotates the rolling barrel support frame relative to the towing means about the carriage means between the transport position and the working orientation.

Ideally, the primary powered actuation means is remotely actuatable from the powered towing vehicle. Advantageously, the land roller can be actuated from the transport position to the working orientation by a driver in the seat of the towing vehicle avoiding any robust manual labour for the driver. This also saves time for the farmer/contractor which is a significant commercial benefit. This remote actuation of the primary powered actuation means allows a reduction of land roller set up/close down time before and after rolling providing more time for actually rolling the ground. This allows greater areas of land to be rolled in the same amount of time.

Ideally, the primary powered actuation means comprises at least one hydraulic ram.

Preferably, the primary powered actuation means is operably coupled between the rolling barrel support frame and the towing means.

Preferably, the primary powered actuation means is operably couplable to the hydraulic system of the powered towing vehicle. Advantageously, the primary powered actuation means can be powered from the existing hydraulic drive system on the powered towing vehicle. The primary powered actuation means can also be remotely controlled from control means within reaching distance of the driver while seated in the powered towing vehicle, again saving downtime.

Ideally, the full travel of the primary powered actuation means causes the rolling barrel assembly to rotate between the transport position and the working orientation.

Preferably, the full travel of the primary powered actuation means causes the rolling barrel assembly to rotate up to and beyond 90 degrees between the transport position and the working orientation.

Ideally, the primary powered actuation means extends and retracts in a direction parallel to the longitudinal axis of the part of the towing means movably coupled to the rolling barrel support frame.

Preferably, a pivotal coupling joint is provided on the towing means and the rolling barrel support frame for pivotally coupling the primary powered actuation means there between.

Ideally, the carriage means is movably coupled to the rolling barrel support frame so as to be movable between an extended transport positon and a retracted storage position.

Ideally, the carriage means is capable of raising and lowering the rolling barrel from and to the ground for moving the land roller between a working orientation and a working position.

Preferably, the carriage means comprises a wheel support arrangement movably coupled to the rolling barrel support frame and a pair of wheels mounted at or about opposing ends of the wheel support arrangement so as to be disposed on opposing sides of the rolling barrel support frame.

Ideally, the carriage means comprises a wheel support arrangement movably coupled to the rolling barrel support frame and a pair of wheels mounted on opposing ends of the wheel support arrangement so as to be disposed on opposing sides of the land roller, the wheels being movable relative to the rolling barrel support frame between an extended transport positon and a retracted storage position.

In the extended transport positon, the wheels are in contact with the ground and the rolling barrel is raised off the ground allowing the land roller to be towed along the public road or lane on the wheels. In the storage positon, the rolling barrel is in contact with the ground and the wheels are raised off the ground allowing the rolling barrel to be moved into the working position and to be rolled along the ground.

Preferably, the carriage means comprises a wheel support arrangement movably coupled to the rolling barrel support frame at or about a midpoint along the length of the rolling barrel support frame.

Ideally, the wheel support arrangement is movably coupled to both sides of the rolling barrel support frame.

Preferably, the carriage means comprises a wheel support arrangement pivotally coupled to both sides of the rolling barrel support frame.

Ideally, pivotal coupling joints are provided on opposite sides of the rolling barrel support frame and opposite sides of the wheel support arrangement for receiving pins for pivotally coupling the rolling barrel support frame and the wheel support arrangement together.

Preferably, the pivotal coupling joints of the rolling barrel support frame and/or the pivotal coupling joints of the wheel support arrangement are reinforced.

Ideally, the carriage means comprises a powered actuator operably coupled between the rolling barrel support frame and the wheel support arrangement.

Preferably, the wheel support arrangement comprises a central beam spanning across the top of the rolling barrel support frame and two downwardly depending arms which are movably coupled, most preferably pivotally coupled to the rolling barrel support frame.

Ideally, a wheel is movably mounted at or about the free end of each downwardly depending arm of the wheel support arrangement.

Ideally, the downwardly depending arms are curvilinear beams. Advantageously, this curvature reduces the amount of space required for the wheel support arrangement to achieve the transport position and the working position for the carriage means. This curvature allows minimum ram movement to achieve vertical clearance.

Ideally, the two downwardly depending arms are movably coupled, most preferably pivotally coupled to the two longitudinal beams on each side of the roller barrel.

Ideally, two longitudinal beams extend along the longitudinal edges of the rolling barrel at or about a horizontal plane bisecting the rolling barrel.

Preferably, the rolling barrel support frame comprises a quadrangular cradle comprising two longitudinal beams extending along the opposing longitudinal edge portions of the rolling barrel and the two longitudinal beams being connected by two load bearing end plates spanning across the latitudinal end faces of the rolling barrel.

Ideally, the two load bearing end plates have support means for supporting a rolling barrel axle.

Preferably, the support means on the two load bearing end plates are roller bearings. The roller bearing type and size as selected for the weight and dimensions of the specific rolling barrel to include the weight of any ballast.

Ideally, the two load bearing end plates are reinforced at the mounting location of the roller bearings for journaling the axle of the rolling barrel.

Ideally, the rolling barrel is pivotally mounted on the two load bearing end plates so as to allow the rolling barrel to freely rotate within the quadrangular cradle in use.

Preferably, the rolling barrel support frame comprises a structural support bridge, most preferably arcuate spanning across the top of the rolling barrel, most preferably at or about the centre of the rolling barrel support frame between the two longitudinal beams.

Ideally, the towing means is movably coupled to the structural support bridge.

Preferably, the towing means is movably coupled to the structural support bridge at a point centrally above the rolling barrel corresponding to twelve o'clock.

Preferably, the towing means is pivotally coupled to the structural support bridge.

Ideally, the towing means is pivotally coupled to the structural support bridge by a pivotal coupling arrangement.

Preferably, the towing means is pivotally coupled to the structural support bridge by a pin and bush arrangement.

Ideally, the structural support bridge comprises an upper section comprising an open channel section opening towards the leading end of the rolling barrel, the open channel section housing one end of the towing means via the roller bearing assembly.

Preferably, the open channel section is open for receiving a part of the length of the towing means.

Ideally, the towing means extends from the rolling barrel support frame at a sufficient height and angle to clear the upper portion of the wheels when the wheels are in an extended transport position and the land roller is being moved between the transport position and the working orientation.

Preferably, the towing means extends from the structural support bridge at a sufficient height and angle to clear the upper portion of the wheels when the wheels are in an extended transport position and the land roller is being moved between the transport position and the working orientation.

Ideally, the towing means extends orthogonally from the rolling barrel support frame/structural support bridge above the rolling barrel.

Preferably, the towing means comprises a first part having a first elongate beam being movably coupled to the rolling barrel frame/structural support bridge.

Ideally, the towing means comprises a first part having a first elongate beam being pivotally coupled to the rolling barrel frame/structural support bridge.

Preferably, the towing means comprises a second part having a second elongate beam inclined downward from the first elongate beam towards and being detachably couplable to a towing hitch of the powered towing vehicle.

Ideally, the first and second elongate beams are box section structural support beams, most preferably steel.

Preferably, the first elongate beam extends from the structural support bridge to a point beyond, most preferably just beyond the leading end load bearing plate.

Ideally, the leading end load bearing plate has a support member for locating and retaining the towing means, most preferably the leading end of the first elongate beam.

Preferably, a releasable locking means is provided between the towing means and the rolling barrel support frame for releasably locking the towing means and the rolling barrel support frame together in the transport position and the working position.

Ideally, the releasable locking means comprises a first locking assembly for releasably locking the towing means and the rolling barrel support frame together in the transport position.

Preferably, the first locking assembly comprises a locking bar mounted on the towing means, preferably mounted on top of the first elongate beam and a latch mounted on the leading end load bearing plate for operable engagement with the locking bar in the transport position.

Ideally, the releasable locking means comprises a second locking assembly for releasably locking the towing means and the rolling barrel support frame together in the working position.

Preferably, the second locking assembly comprises a locking plate fixed to the arcuate arms, locking the towing means in place when the wheels are lifted.

Preferably, the carriage means powered actuator is operably coupled between the central beam of the wheel support arrangement and the trailing end load bearing plate of the cradle, most preferably above the barrel.

Preferably, the carriage means powered actuator is pivotally coupled between the central beam of the wheel support arrangement and the trailing end load bearing plate of the cradle, most preferably above the barrel.

Ideally, the carriage means powered actuator is operably coupled at or about the midpoint of the central beam of the wheel support arrangement and at or about the upper end of the trailing end load bearing plate of the cradle, most preferably above the barrel. Advantageously, this means that the forces acting on the central beam and the end plate via the carriage means powered actuator are balanced and evenly distributed allowing maximum efficiency from the carriage means powered actuator and reducing the risk of twisting or torsional resistance during operation of the carriage means powered actuator.

Preferably, the carriage means powered actuator comprises at least one hydraulic ram operably couplable to the hydraulic system of the powered towing vehicle. Advantageously, the hydraulic ram can be coupled to the hydraulic drive system of the towing powered actuator. The hydraulic ram can be remotely controlled from control means within reaching distance of the driver of the powered towing vehicle.

Ideally, the full travel of the carriage means powered actuator causes the wheel support arrangement and wheels to rotate between the transport position and the working position.

Preferably, the full travel of the carriage means powered actuator causes the wheel support arrangement and wheels to rotate between the transport positon and the working position.

Ideally, the longitudinal axis of the rolling barrel in the transport position is substantially in alignment with the direction of travel of the towing vehicle when the towing vehicle is traveling in a straight line.

Preferably, the longitudinal axis of the rolling barrel in the transport position is substantially in alignment with the longitudinal axis of the towing vehicle when the towing vehicle is traveling in a straight line.

Ideally, the longitudinal axis of the rolling barrel in the working position is substantially perpendicular to the direction of travel of the towing vehicle when the towing vehicle is traveling in a straight line.

Preferably, the longitudinal axis of the rolling barrel in the working position is substantially perpendicular to the longitudinal axis of the towing vehicle when the towing vehicle is traveling in a straight line.

The invention will now be described with reference to the accompanying drawing which shows by way of example only one embodiment of a land roller in accordance with the invention. In the drawings:
Figure 1 is a first perspective view of the land roller in a transport position;
Figure 2 is a second perspective view of the land roller in a transport position;
Figure 3 is a first perspective view of the land roller in a working position;
Figure 4 is a second perspective view of the land roller in a working position;

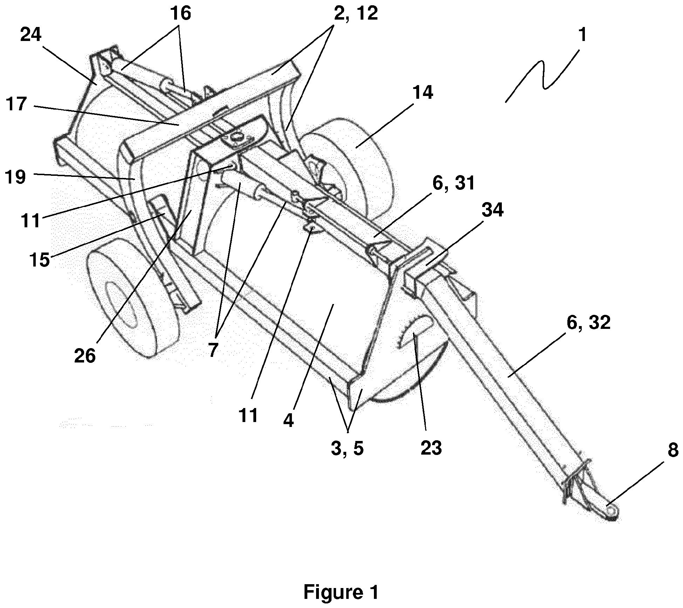

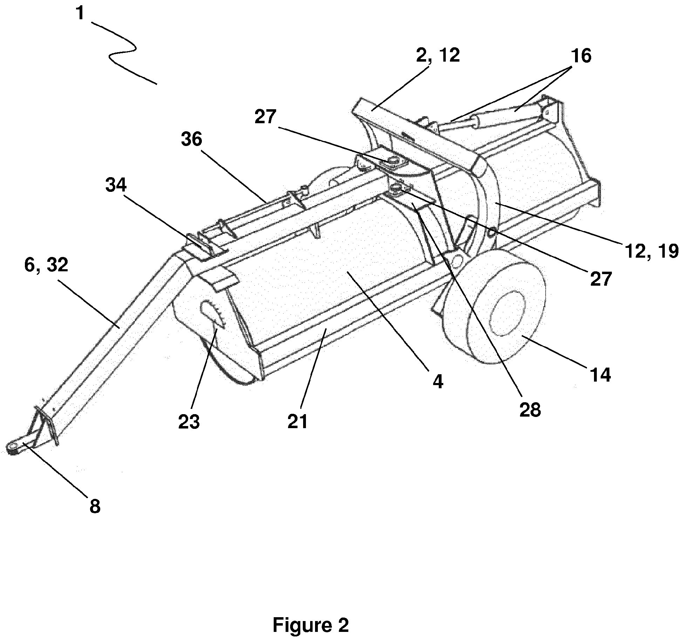

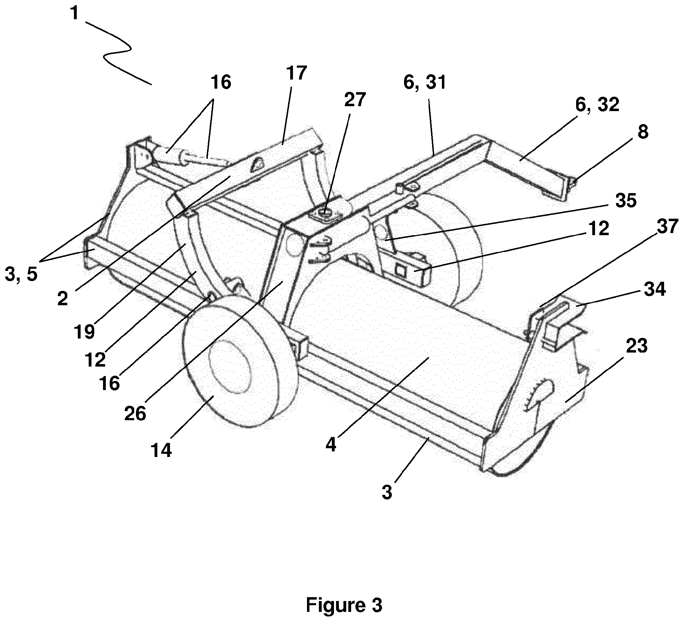

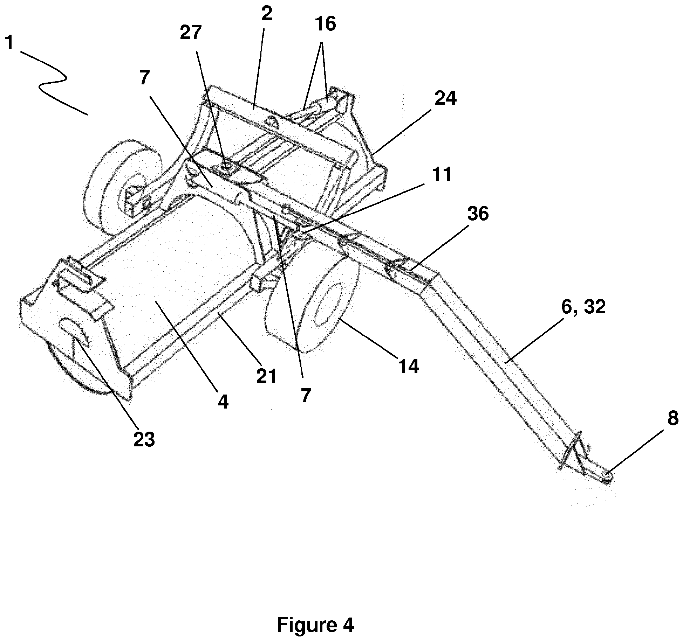

Referring to the drawings generally, there is shown a land roller indicated generally by the reference numeral 1 for rolling land comprising a carriage assembly 2 for transporting the land roller 1 behind a powered towing vehicle not show. A rolling barrel assembly 3 is operably coupled with the carriage assembly 2. The rolling barrel assembly 3 has a rolling barrel 4 housed within and movably mounted on a rolling barrel support frame 5. A towing member 6 is movably coupled together with the rolling barrel support frame 5. The rolling barrel support frame 5 and the towing member 6 are movable relative to one another by a primary powered actuator 7 for moving the land roller 1 between a transport position, Figures 1 and 2 and an in use working orientation/position, Figures 3 and 4.

Advantageously, the land roller 1 can be moved on public roads or on country lanes, which are often narrow, in the transport position and can be moved into the working orientation using the primary powered actuator 7 when the land roller 1 is towed into a field or worksite where ground is to be rolled.

In the working orientation, the longitudinal axis of the rolling barrel 4 of the land roller 1 is generally perpendicular to the direction of travel of the towing vehicle when the towing vehicle is travelling in a straight line. The rolling barrel support frame 5 and the towing member 6 being movable relative to one another by a primary powered actuator 7 between a transport position and an in use working orientation via the carriage assembly 2. The towing member 6 is operably couplable to the powered towing vehicle via a heavy duty ring hitch 8. When the towing member 6 is operably coupled to the powered towing vehicle so as to be fixed in position, actuation of the primary powered actuator pivots the rolling barrel support frame 5 relative to the towing member 6 about the carriage assembly 2 between the transport position illustrated in Figures 1 and 2 and the working orientation/position illustrated in Figures 3 and 4. The primary powered actuator 7 is remotely actuatable from the powered towing vehicle. Advantageously, the land roller 1 can be actuated from the transport position to the working orientation by a driver in the seat of the towing vehicle avoiding any robust manual labour for the driver. This also saves time for the farmer/contractor which is a significant commercial benefit. This remote actuation of the primary powered actuator 7 allows a reduction of land roller 1 set up/close down time before and after rolling, providing more time for actually rolling the ground. This allows greater areas of land to be rolled in the same amount of time.

The primary powered actuator 7 is a hydraulic ram 7.The primary powered actuator 7 is operably coupled between the rolling barrel support frame 5 and the towing member 6. The primary powered actuator is operably coupled to the hydraulic system of the powered towing vehicle via hydraulic pipe lines which are detachably coupled to a hydraulic terminal on the vehicle. Advantageously, the primary powered actuator 7 can be powered from the existing hydraulic drive system on the powered towing vehicle. The primary powered actuator 7 can also be remotely controlled from a control member within reaching distance of the driver while seated in the powered towing vehicle, again saving downtime.

The full travel of the primary powered actuator 7 causes the rolling barrel assembly 3 to rotate between the transport position and the working orientation. In the embodiment shown in the drawings, the full travel of the primary powered actuator 7 causes the rolling barrel assembly 3 to rotate approximately 90 degrees between the transport position and the working orientation. The primary powered actuator 7 extends and retracts in a direction parallel to the longitudinal axis of the part of the towing member 6 movably coupled to the rolling barrel support frame 5. The primary powered actuator 7 is mounted between two upright, most preferably horizontal surfaces of the towing member 6 and the rolling barrel support frame 5 which are perpendicular to one another in the transport position and which are substantially in alignment with one another in the working position.

A pivotal coupling joint 11 is provided on the towing member 6 and the rolling barrel support frame 5 for pivotally coupling the primary powered actuator 7 there between. The carriage assembly 2 is movably coupled to the rolling barrel support frame 5 so as to be movable between an extended transport positon see Figures 1 and 2 and a retracted storage position, see Figures 3 and 3. The carriage assembly 2 is capable of lowering and raising the rolling barrel 4 to and from the ground for moving the land roller 1 between a working orientation and a working position. The carriage assembly 2 has a wheel support arrangement 12 movably coupled to the rolling barrel support frame 5 and a pair of wheels 14 mounted at or about opposing ends of the wheel support arrangement 12 so as to be disposed on opposing sides of the rolling barrel support frame 5. The wheels 14 are movable relative to the rolling barrel support frame 5 between an extended transport positon and a retracted storage position.

In the extended transport positon, the wheels 14 are in contact with the ground and the rolling barrel 4 is raised off the ground allowing the land roller 1 to be towed along the public road or lane on the wheels, see Figures 1 and 2. In the storage positon, the rolling barrel 4 is in contact with the ground and the wheels 14 are raised off the ground allowing the rolling barrel 4 to be moved into the working position and to be rolled along the ground as illustrated in Figures 3 and 4. The wheel support arrangement 12 is movably coupled to the rolling barrel support frame 5 at or about a midpoint along the length of the rolling barrel support frame 5. The wheel support arrangement 12 is pivotally coupled to both sides of the rolling barrel support frame 5. Pivotal coupling joints 15, most preferably reinforced are provided on opposite sides of the rolling barrel support frame 5 and opposite sides of the wheel support arrangement 12 for receiving pins 16 for pivotally coupling the rolling barrel support frame 5 and the wheel support arrangement 12 together.

The carriage assembly 2 has a powered actuator 16 operably coupled between the rolling barrel support frame 5 and the wheel support arrangement 12. The wheel support arrangement 12 has a central beam 17 spanning across the top of the rolling barrel support frame 5 and two downwardly depending arms 19 which are movably coupled, most preferably pivotally coupled to the rolling barrel support frame 5. The wheels 14 are movably mounted at or about the free end of each downwardly depending arm 19 of the wheel support arrangement 12. The downwardly depending arms 19 are curvilinear beams. Advantageously, this curvature reduces the amount of space required for the wheel support arrangement 12 to achieve the transport position and the working position for the carriage assembly. The two downwardly depending arms 19 are movably coupled, most preferably pivotally coupled to the pivotal coupling joints 15 on two longitudinal beams 21 on each side of the roller barrel 4. The two longitudinal beams 21 extend along the longitudinal edges of the rolling barrel 4 at or about a horizontal plane bisecting the rolling barrel.

The rolling barrel support frame 5 has a quadrangular cradle comprising two longitudinal beams 21 extending along the opposing longitudinal edge portions of the rolling barrel 4 and the two longitudinal beams 21 being connected by two load bearing end plates 23, 24 spanning across the latitudinal end faces of the rolling barrel 4. The two load bearing end plates 23, 24 have support members for supporting a rolling barrel axle, not shown. The support members on the two load bearing end plates 23, 24 are nylon bushes housing a solid continuous shaft. The roller bearings are sized for the weight and dimensions of the specific rolling barrel 4 to include the weight of any ballast. The two load bearing end plates 23, 24 are reinforced at the mounting location of the roller bearings for journaling the axle of the rolling barrel. The rolling barrel 4 is pivotally mounted on the two load bearing end plates 23, 24 so as to allow the rolling barrel 4 to freely rotate within the quadrangular cradle 21, 23, 24 in use.

The rolling barrel support frame 5 has a structural support bridge 26, most preferably arcuate spanning across the top of the rolling barrel 4, most preferably at or about the centre of the rolling barrel support frame 5 between the two longitudinal beams 21. The towing member 6 is movably coupled to the structural support bridge 26. The towing member 6 is movably coupled to the structural support bridge 26 at a point centrally above the rolling barrel 4 corresponding to twelve o'clock. The towing member 6 is pivotally coupled to the structural support bridge 26 by a pivotal coupling arrangement 27 provided by a heavy pin and bush arrangement 27. The structural support bridge 26 has an upper section comprising an open channel section 28 opening towards the leading end of the rolling barrel 4. The open channel section 28 having one end of the towing member 6 pivotally coupled thereto via the pair of heavy duty roller bearing assemblies 27. The open channel section 28 is open for receiving a part of the length of the towing member 6. The towing member 6 extends from open channel section 28 of the structural support bridge 26 at a sufficient height and angle to clear the top of one of the wheels 14 when the wheels are in an extended transport positon and the land roller 1 is being moved between the transport position and the working orientation. The towing member 6 extends orthogonally from the rolling barrel support frame/structural support bridge 26 above the rolling barrel 4.

The towing member 6 has a first part being a first elongate beam 31 which is pivotally coupled to the rolling barrel support frame/structural support bridge 26. The towing member 6 has a second part being a second elongate beam 32 inclined downward from the first elongate beam 31 towards and being detachably couplable to a towing hitch of the powered towing vehicle. The first and second elongate beams 31, 32 are steel box section structural support beams. The first elongate beam 31 extends from the structural support bridge 26 to a point just beyond the leading end load bearing plate 24. The leading end load bearing plate 24 has a support member 34 for locating and retaining the towing member 6, most preferably the leading end of the first elongate beam 31. A releasable locking arrangement 35, 36, 37 is provided between the towing member 6 and the rolling barrel support frame 5 for releasably locking the towing member 6 and the rolling barrel support frame 5 together in the transport position and the working position. The releasable locking arrangement has a first locking assembly 36, 37 for releasably locking the towing member 6 and the rolling barrel support frame 5 together in the transport position. The first locking assembly 36, 37 has a locking bar 36 mounted on the towing member 6, preferably mounted on top of the first elongate beam 31 and a latch 37 mounted on the leading end load bearing plate 24 for operable engagement with the locking bar 36 in the transport position. The releasable locking arrangement can be powered, most preferably hydraulically operated, preferably remotely from the powered towing vehicle via the hydraulic drive system of the powered towing vehicle. This allows an operator to open the releasable locking arrangement from the towing vehicle. The releasable locking arrangement comprises a second locking assembly for releasably locking the towing member and the rolling barrel support frame 5 together in the working position. The second locking assembly comprises a locking plate fixed to the arcuate arms, locking the towing member in place when the wheels are lifted.

The carriage assembly powered actuator 16 is operably coupled and ideally pivotally coupled between the central beam 17 of the wheel support arrangement 12 and the trailing end load bearing plate 24 of the cradle, above the rolling barrel 4. The carriage assembly powered actuator 16 is operably coupled at or about the midpoint of the central beam 17 of the wheel support arrangement 12 and at or about the upper end of the trailing end load bearing plate 24 of the cradle, above the barrel 4. Advantageously, this means that the forces acting on the central beam 17 and the trailing end load bearing plate 24 via the carriage assembly powered actuator 16 are balanced and evenly distributed allowing maximum efficiency from the carriage assembly powered actuator 16 and reducing the risk of twisting or torsional resistance during operation of the carriage assembly powered actuator 16. The carriage assembly powered actuator 16 has a hydraulic ram 16 operably couplable to the hydraulic system of the powered towing vehicle. Advantageously, the hydraulic ram 16 can be coupled to the hydraulic drive system of the towing powered actuator. The hydraulic ram 16 can be remotely controlled from control members within reaching distance of the driver of the powered towing vehicle. The full travel of the carriage assembly powered actuator 16 causes the wheel support arrangement 12 and wheels 14 to rotate between the transport position and the working position. The full travel of the carriage assembly powered actuator 16 causes the wheel support arrangement 12 and wheels 14 to rotate between the transport positon and the working position.

The longitudinal axis of the rolling barrel 4 in the transport position is substantially in alignment with the direction of travel/longitudinal axis of the towing vehicle when the towing vehicle is traveling in a straight line. The longitudinal axis of the rolling barrel 4 in the working position is substantially perpendicular to the direction of travel/ longitudinal axis of the towing vehicle when the towing vehicle is traveling in a straight line.

In use, a driver reverses a tractor towards the towing ring 8 of the land roller 1 which is in a transport position as illustrated in Figures 1 and 2 and picks the towing ring up on a hydraulic hitch. The hydraulic pipes of the hydraulic actuators 16 and 7 as well as the hydraulic latches 37, must be manually coupled to a hydraulic terminal at the rear of the tractor. The driver of the tractor tows the land roller 1 to the work site for an area of land is to be rolled. When arriving at the site, the driver operates the hydraulic latch 37 into an open positon of the first locking assembly 35 which releases the locking bar 36. The driver then powers the primary actuator 7 with the wheels 14 still on the ground. The extension of the hydraulic ram 7 causes the rear end of the hydraulic ram 7 to rotate the structural support bridge 26, the rolling barrel support frame 5 and rolling barrel away from the towing member 6 about the roller bearing assembly 27 in a clockwise direction with the entire assembly rotating on the wheels. When the rolling barrel support frame 5 has been rotated into the working orientation, the secondary locking assembly is actuated by movement of the towing member 6 into this working position. The driver then actuates carriage assembly powered actuator 16 which causes the wheel support arrangement 12 and wheels 14 to pivot about the pivotal coupling members 15 between the transport position and the working position. The full travel of the carriage assembly powered actuator 16 causes the wheel support arrangement 12 and wheels 14 to rotate between the transport positon and the working position lowering the wheels 14 onto the ground whilst simultaneously lowering the roller barrel 4 onto the ground for rolling. With the land roller in this positon, the farmer can tow the roller across the land to be rolled. When the rolling operation is complete, the reverse of the process outlined above is used to automatically adapt the land roller from the working positon to the transport positon for onward transportation.

In relation to the detailed description of the different embodiments of the invention, it will be understood that one or more technical features of one embodiment can be used in combination with one or more technical features of any other embodiment where the transferred use of the one or more technical features would be immediately apparent to a person of ordinary skill in the art to carry out a similar function in a similar way on the other embodiment.

In the preceding discussion of the invention, unless stated to the contrary, the disclosure of alternative values for the upper or lower limit of the permitted range of a parameter, coupled with an indication that one of the said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

The features disclosed in the foregoing description or the following drawings, expressed in their specific forms or in terms of a means for performing a disclosed function, or a method or a process of attaining the disclosed result, as appropriate, may separately, or in any combination of such features be utilised for realising the invention in diverse forms thereof as defined in the appended claims.

## Claims

1. A land roller (1) for rolling land comprising a carriage means (2) for transporting the land roller (1) behind a powered towing vehicle, a rolling barrel assembly (3) operably coupled with the carriage means (2), the rolling barrel assembly (3) comprising a rolling barrel (4) housed within and movably mounted on a rolling barrel support frame (5), and a towing means (6) being movably coupled together with the rolling barrel support frame (5), the rolling barrel support frame (5) and the towing means (6) being movable relative to one another by a primary powered actuation means (7) for moving the land roller (1) between a transport position and an in use working orientation wherein the carriage means (2) comprises a wheel support arrangement (12) movably coupled to the rolling barrel support frame (5) and a pair of wheels (14) mounted at or about opposing ends of the wheel support arrangement (12) so as to be disposed on opposing sides of the rolling barrel support frame (5) and on opposing sides of the longitudinal axis of the rolling barrel (4) in the transport position and the in use working position, wherein the primary powered actuation means (7) is a hydraulic ram directly coupled to a pivotal coupling joint (11) on the rolling barrel support frame (5), **characterised in that** the primary powered actuation means (7) is furthermore directly coupled to a pivotal coupling joint (11) on the towing means (6).

2. A land roller (1) as claimed in claim 1, wherein a releasable locking means (35,36,37) is provided between the towing means (6) and the rolling barrel support frame (5) for releasably locking the towing means (6) and the rolling barrel support frame (5) together in the transport position and the working position.

3. A land roller (1) as claimed in claim 2, wherein the releasable locking means (35,36,37) comprises a first locking assembly (36,37) for releasably locking the towing means (6) and the rolling barrel support frame (5) together in the transport position.

4. A land roller (1) as claimed in claim 2 or claim 3, wherein the releasable locking means (35,36,37) comprises a second locking assembly (35) for releasably locking the towing means (6) and the rolling barrel support frame (5) together in the working position.

5. A land roller (1) as claimed in any preceding claim, wherein the rolling barrel support frame (5) and the towing means (6) are movable relative to one another by a primary powered actuation means (7) between a transport position and an in use working orientation via the carriage means (2) with the wheels (14) on the ground.

6. A land roller (1) as claimed in any preceding claim, wherein when the towing means (6) is operably coupled to the powered towing vehicle so as to be fixed in position, actuation of the primary powered actuation means (7) moves, and most preferably rotates the rolling barrel support frame (5) relative to the towing means (6) about the carriage means (2) between the transport position and the working orientation.

7. A land roller (1) as claimed in any one of the preceding claims, wherein the carriage means (2) comprises the wheel support arrangement (12) movably coupled to the rolling barrel support frame (5) and a pair of wheels (14) mounted on opposing ends of the wheel support arrangement (12) so as to be disposed on opposing sides of the land roller (1) and on opposing sides of the the longitudinal axis of the rolling barrel (4), the wheels (14) being movable relative to the rolling barrel support frame (5) between an extended transport positon and a retracted storage position.

8. A land roller (1) as claimed in any one of the preceding claims, wherein the carriage means (2) comprises the wheel support arrangement (12) movably coupled to the rolling barrel support frame (5) at or about a midpoint along the length of the rolling barrel support frame (5).

9. A land roller (1) as claimed in any one of the preceding claims , wherein the wheel support arrangement (12) is movably coupled to both sides of the rolling barrel support frame (5) on opposing sides of the longitudinal axis of the rolling barrel (4), wherein pivotal coupling joints (15) are provided on opposite sides of the rolling barrel support frame (5) and opposite sides of the wheel support arrangement (12) and opposing sides of the longitudinal axis of the rolling barrel (4) for receiving pins for pivotally coupling the rolling barrel support frame (5) and the wheel support arrangement (12) together.

10. A land roller (1) as claimed in any one of the preceding claims, wherein the carriage means (2) comprises a powered actuator (16) operably coupled between the rolling barrel support frame (5) and the wheel support arrangement (12).

11. A land roller (1) as claimed in any one of the preceding claims, wherein the wheel support arrangement (12) comprises a central beam (17) spanning across the top of the rolling barrel support frame (5) and two downwardly depending arms (19) which are movably coupled, most preferably pivotally coupled to the rolling barrel support frame (5) and wherein a wheel (14) is movably mounted at or about the free end of each downwardly depending arm of the wheel support arrangement (12), the downwardly depending arms (19) are curvilinear beams.

12. A land roller (1) as claimed in any preceding claim, wherein the rolling barrel support frame (5) comprises a quadrangular cradle comprising two longitudinal beams (21) extending along the opposing longitudinal edge portions of the rolling barrel (4) and the two longitudinal beams (21) being connected by two load bearing end plates (23,24) spanning across the latitudinal end faces of the rolling barrel (4), wherein the two load bearing end plates (23,24) have support means for supporting a rolling barrel axle, wherein the support means on the two load bearing end plates (23,24) are roller bearings, wherein the two load bearing end plates (23,24) are reinforced at the mounting location of the roller bearings for journaling the axle of the rolling barrel (4).

13. A land roller (1) as claimed in claim 12, wherein the rolling barrel support frame (5) comprises a structural support bridge (26), most preferably arcuate spanning across the top of the rolling barrel (4), most preferably at or about the centre of the rolling barrel support frame (5) between the two longitudinal beams (21), wherein the towing means (6) is movably, most preferably pivotally coupled to the structural support bridge (26), wherein the towing means (6) extends from the rolling barrel support frame (5) at a sufficient height and angle to clear the upper portion of the wheels (14) when the wheels (14) are in an extended transport position and the land roller (1) is being moved between the transport position and the working orientation.

14. A land roller (1) as claimed in any one of the preceding claims, wherein the towing means (6) comprises a first part having a first elongate beam (31) being movably, most preferably pivotally coupled to the rolling barrel support frame (5) wherein the towing means (6) comprises a second part having a second elongate beam (32) inclined downward from the first elongate beam (31) towards and being detachably couplable to a towing hitch of the powered towing vehicle.

15. A land roller (1) as claimed in any one of the preceding claims, wherein the towing means (6) and the primary powered actuation means (7) are pivotably coupled to a structural support bridge (26) arcuate spanning across the top of the rolling barrel (4).

## Patentansprüche

1. Ackerwalze (1) zum Beackern von Boden, eine Wageneinrichtung (2) zum Transportieren der Ackerwalze (1) hinter einem angetriebenen Zugfahrzeug umfassend, wobei eine Walzzylinderanordnung (3) mit der Wageneinrichtung (2) wirkverbunden ist, wobei die Walzzylinderanordnung (3) einen Walzzylinder (4) umfasst, der in einem Walzzylindertragrahmen (5) aufgenommen und drehbar montiert ist, und wobei eine Zugeinrichtung (6) mit dem Walzzylindertragrahmen (5) beweglich gekoppelt ist, wobei der Walzzylindertragrahmen (5) und die Zugeinrichtung (6) über eine primäre angetriebene Betätigungseinrichtung (7) in Bezug zueinander beweglich sind, um die Ackerwalze (1) zwischen einer Transportstellung und einer Arbeitsausrichtung zu bewegen, wobei die Wageneinrichtung (2) eine Radträgeranordnung (12) umfasst, die beweglich mit dem Walzzylindertragrahmen (5) gekoppelt ist, und ein Paar Räder (14), die an oder um entgegengesetzte Enden der Radträgeranordnung (12) montiert sind, um auf entgegengesetzten Seiten des Walzzylindertragrahmens (5) und auf entgegengesetzten Seiten der Längsachse des Walzzylinders (4) in der Transportstellung und der Arbeitsausrichtung angeordnet sind,
wobei die primäre angetriebene Betätigungseinrichtung (7) ein hydraulischer Kolben ist, der direkt mit einem Drehkupplungsgelenk (11) auf dem Walzzylindertragrahmen (5) gekoppelt ist, **dadurch gekennzeichnet, dass** die primäre angetriebene Betätigungseinrichtung (7) ferner direkt mit einem Drehkupplungsgelenk (11) an der Zugeinrichtung (6) gekoppelt ist.

2. Ackerwalze (1) nach Anspruch 1, wobei eine lösbare Verriegelungseinrichtung (35, 36, 37) zwischen der Zugeinrichtung (6) und dem Walzzylindertragrahmen (5) vorgesehen ist, um die Zugeinrichtung (6) und den Walzzylindertragrahmen (5) in der Transportstellung und der Arbeitsausrichtung lösbar zu verriegeln.

3. Ackerwalze (1) nach Anspruch 2, wobei die lösbare Verriegelungseinrichtung (35, 36, 37) eine erste Verriegelungsanordnung (36, 37) umfasst, um die Zugeinrichtung (6) und den Walzzylindertragrahmen (5) in der Transportstellung lösbar zu verriegeln.

4. Ackerwalze (1) nach Anspruch 2 oder 3, wobei die lösbare Verriegelungseinrichtung (35, 36, 37) eine zweite Verriegelungsanordnung (35) umfasst, um die Zugeinrichtung (6) und den Walzzylindertragrahmen (5) in der Arbeitsausrichtung lösbar zu verriegeln.

5. Ackerwalze (1) nach einem der vorstehenden Ansprüche, wobei der Walzzylindertragrahmen (5) und die Zugeinrichtung (6) mittels einer primären angetriebenen Betätigungseinrichtung (7) zwischen einer Transportstellung und einer Arbeitsausrichtung über die Wageneinrichtung (2) mit den Rädern (14) auf dem Boden in Bezug zueinander beweglich sind.

6. Ackerwalze (1) nach einem der vorstehenden Ansprüche, wobei, wenn die Zugeinrichtung (6) mit dem angetriebenen Zugfahrzeug wirkverbunden ist, um lokal fixiert zu werden, die Betätigung der primär angetriebenen Betätigungseinrichtung (7) den Walzzylindertragrahmen (5) in Bezug zur Zugeinrichtung (6) zwischen der Transportstellung und der Arbeitsausrichtung um die Wageneinrichtung (2) bewegt und am meisten bevorzugt dreht.

7. Ackerwalze (1) nach einem der vorstehenden Ansprüche, wobei die Wageneinrichtung (2) die Radträgeranordnung (12), die beweglich mit dem Walzzylindertragrahmen (5) gekoppelt ist, und ein Paar Räder (14), die an entgegengesetzten Enden der Radträgeranordnung (12) montiert sind, um auf entgegengesetzten Seite der Ackerwalze (1) und auf entgegengesetzten Seiten der Längsachse des Walzzylinders (4) angeordnet zu sein, umfasst, wobei die Räder (14) in Bezug zum Walzzylindertragrahmen (5) zwischen einer ausgefahrenen Transportstellung und einer eingefahrenen Lagerstellung beweglich sind.

8. Ackerwalze (1) nach einem der vorstehenden Ansprüche, wobei die Wageneinrichtung (2) die Radträgeranordnung (12) umfasst, die an oder um einen Mittelpunkt entlang der Länge des Walzzylindertragrahmens (5) beweglich mit dem Walzzylindertragrahmen (5) gekoppelt ist.

9. Ackerwalze (1) nach einem der vorstehenden Ansprüche, wobei die Radträgeranordnung (12) mit beiden Seiten des Walzzylindertragrahmens (5) auf entgegengesetzten Seiten der Längsachse des Walzzylinders (4) beweglich gekoppelt ist, wobei die Drehkupplungsgelenke (15) auf entgegengesetzten Seiten des Walzzylindertragrahmens (5) und entgegengesetzten Seiten der Radträgeranordnung (12) und entgegengesetzten Seite der Längsachse des Walzzylinders (4) vorgesehen sind, um Stifte zum verschwenkbaren Koppeln des Walzzylindertragrahmens (5) mit der Radträgeranordnung (12) aufzunehmen.

10. Ackerwalze (1) nach einem der vorstehenden Ansprüche, wobei die Wageneinrichtung (2) ein angetriebenes Stellglied (16) umfasst, das zwischen dem Walzzylindertragrahmen (5) und der Radträgeranordnung (12) wirkverbunden ist.

11. Ackerwalze (1) nach einem der vorstehenden Ansprüche, wobei die Radträgeranordnung (12) einen mittigen Balken (17), der über die Oberseite des Walzzylindertragrahmens (5) verläuft, und zwei nach unten hängende Arme (19), die mit dem Walzzylindertragrahmen (5) beweglich gekoppelt, am meisten bevorzugt verschwenkbar gekoppelt sind, umfasst, und wobei ein Rad (14) beweglich an oder um das freie Ende jedes nach unten hängenden Arms der Radträgeranordnung (12) montiert ist, wobei die nach unten hängenden Arme (19) gekrümmte Balken sind.

12. Ackerwalze (1) nach einem der vorstehenden Ansprüche, wobei der Walzzylindertragrahmen (5) einen viereckigen Sattel umfasst, der zwei in Längsrichtung verlaufende Balken (21) umfasst, die sich entlang der entgegengesetzten Längskantenabschnitte des Walzzylinders (4) und der zwei in Längsrichtung verlaufenden Balken (21) erstrecken, die durch zwei lasttragende Endplatten (23, 24) verbunden sind, die über die Breitenstirnseiten des Walzzylinders (4) verlaufen, wobei die zwei lasttragenden Endplatten (23, 24) Trägereinrichtungen zum Tragen einer Walzzylinderachse aufweisen, wobei die Trägereinrichtungen an den zwei lasttragenden Endplatten (23, 24) Wälzlager sind, wobei die zwei lasttragenden Endplatten (23, 24) an der Montagestelle der Wälzlager verstärkt sind, um die Achse des Walzzylinders (4) zu lagern.

13. Ackerwalze (1) nach Anspruch 12, wobei der Walzzylindertragrahmen (5) eine strukturelle Trägerbrücke (26) umfasst, die am meisten bevorzugt bogenförmig ist und über die Oberseite des Walzzylinders (4) verläuft, am meisten bevorzugt an oder um die Mitte des Walzzylindertragrahmens (5) zwischen den zwei in Längsrichtung verlaufenden Balken (21), wobei die Zugeinrichtung (6) beweglich, am meisten bevorzugt verschwenkbar mit der strukturellen Trägerbrücke (26) gekoppelt ist, wobei sich die Zugeinrichtung (6) vom Walzzylindertragrahmen (5) in ausreichender/m Höhe und Winkel erstreckt, um den oberen Abschnitt der Räder (14) freizulassen, wenn sich die Räder (14) in einer ausgefahrenen Transportstellung befinden und die Ackerwalze (1) zwischen der Transportstellung und der Arbeitsausrichtung bewegt wird.

14. Ackerwalze (1) nach einem der vorstehenden Ansprüche, wobei die Zugeinrichtung (6) einen ersten Teil umfasst, der einen ersten länglichen Balken (31) aufweist, der beweglich, am meisten bevorzugt verschwenkbar mit dem Walzzylindertragrahmen (5) gekoppelt ist, wobei die Zugeinrichtung (6) einen zweiten Teil umfasst, der einen zweiten länglichen Balken (32) aufweist, der vom ersten länglichen Balken (31) zu einem Abschlepphaken des angetriebenen Zugfahrzeugs nach unten geneigt und lösbar damit koppelbar ist.

15. Ackerwalze (1) nach einem der vorstehenden Ansprüche, wobei die Zugeinrichtung (6) und die primäre angetriebene Betätigungseinrichtung (7) mit einer strukturellen Trägerbrücke (26) verschwenkbar gekoppelt sind, die bogenförmig ist und über die Oberseite des Walzzylinders (4) verläuft.

## Revendications

1. Rouleau brise-mottes (1) destiné à rouler un terrain, comportant un moyen (2) d'emport servant à transporter le rouleau brise-mottes (1) derrière un véhicule tracteur motorisé, un ensemble (3) de fût roulant couplé fonctionnellement au moyen (2) d'emport, l'ensemble (3) de fût roulant comportant un fût roulant (4) logé à l'intérieur d'un bâti porteur (5) de fût roulant et monté de façon mobile sur celui-ci, et un moyen (6) de traction qui est couplé de façon mobile avec le bâti porteur (5) de fût roulant, le bâti porteur (5) de fût roulant et le moyen (6) de traction pouvant être déplacés l'un par rapport à l'autre par un moyen primaire (7) d'actionnement motorisé servant à déplacer le rouleau brise-mottes (1) entre une position de transport et une orientation de travail en cours d'utilisation, le moyen (2) d'emport comportant un agencement (12) d'appui sur roues couplé de façon mobile au bâti porteur (5) de fût roulant et une paire de roues (14) montées au niveau ou autour d'extrémités opposées de l'agencement (12) d'appui sur roues de façon à être disposées sur des côtés opposés du bâti porteur (5) de fût roulant et sur des côtés opposés de l'axe longitudinal du fût roulant (4) dans la position de transport et la position de travail en cours d'utilisation, le moyen primaire (7) d'actionnement motorisé étant un vérin hydraulique directement couplé à une articulation (11) de couplage pivotant sur le bâti porteur (5) de fût roulant, **caractérisé en ce que** le moyen primaire (7) d'actionnement motorisé est en outre directement couplé à une articulation (11) de couplage pivotant sur le moyen (6) de traction.

2. Rouleau brise-mottes (1) selon la revendication 1, un moyen (35, 36, 37) de verrouillage libérable étant placé entre le moyen (6) de traction et le bâti porteur (5) de fût roulant pour verrouiller ensemble de façon libérable le moyen (6) de traction et le bâti porteur (5) de fût roulant dans la position de transport et la position de travail.

3. Rouleau brise-mottes (1) selon la revendication 2, le moyen (35, 36, 37) de verrouillage libérable comportant un premier ensemble (36, 37) de verrouillage servant à verrouiller ensemble de façon libérable le moyen (6) de traction et le bâti porteur (5) de fût roulant dans la position de transport.

4. Rouleau brise-mottes (1) selon la revendication 2 ou la revendication 3, le moyen (35, 36, 37) de verrouillage libérable comportant un second ensemble (35) de verrouillage servant à verrouiller ensemble de façon libérable le moyen (6) de traction et le bâti porteur (5) de fût roulant dans la position de travail.

5. Rouleau brise-mottes (1) selon l'une quelconque des revendications précédentes, le bâti porteur (5) de fût roulant et le moyen (6) de traction pouvant être déplacés l'un par rapport à l'autre par un moyen primaire (7) d'actionnement motorisé entre une position de transport et une orientation de travail en cours d'utilisation via le moyen (2) d'emport alors que les roues (14) sont sur le sol.

6. Rouleau brise-mottes (1) selon l'une quelconque des revendications précédentes, lorsque le moyen (6) de traction est couplé fonctionnellement au véhicule tracteur motorisé de façon à être fixé en position, l'actionnement du moyen primaire (7) d'actionnement motorisé déplaçant, et idéalement faisant tourner, le bâti porteur (5) de fût roulant par rapport au moyen (6) de traction autour du moyen (2) d'emport entre la position de transport et l'orientation de travail.

7. Rouleau brise-mottes (1) selon l'une quelconque des revendications précédentes, le moyen (2) d'emport comportant l'agencement (12) d'appui sur roues couplé de façon mobile au bâti porteur (5) de fût roulant et une paire de roues (14) montées sur des extrémités opposées de l'agencement (12) d'appui sur roues de façon à être disposées sur des côtés opposés du rouleau brise-mottes (1) et sur des côtés opposés de l'axe longitudinal du fût roulant (4), les roues (14) étant mobiles par rapport au bâti porteur (5) de fût roulant entre une position déployée de transport et une position rétractée de rangement.

8. Rouleau brise-mottes (1) selon l'une quelconque des revendications précédentes, le moyen (2) d'emport comportant l'agencement (12) d'appui sur roues couplé de façon mobile au bâti porteur (5) de fût roulant au niveau ou autour d'un milieu suivant la longueur du bâti porteur (5) de fût roulant.

9. Rouleau brise-mottes (1) selon l'une quelconque des revendications précédentes, l'agencement (12) d'appui sur roues étant couplé de façon mobile aux deux côtés du bâti porteur (5) de fût roulant sur des côtés opposés de l'axe longitudinal du fût roulant (4), des articulations (15) de couplage pivotant étant placées sur des côtés opposés du bâti porteur (5) de fût roulant et des côtés opposés de l'agencement (12) d'appui sur roues et des côtés opposés de l'axe longitudinal du fût roulant (4) pour recevoir des broches servant à coupler ensemble de façon pivotante le bâti porteur (5) de fût roulant et l'agencement (12) d'appui sur roues.

10. Rouleau brise-mottes (1) selon l'une quelconque des revendications précédentes, le moyen (2) d'emport comportant un actionneur motorisé (16) couplé fonctionnellement entre le bâti porteur (5) de fût roulant et l'agencement (12) d'appui sur roues.

11. Rouleau brise-mottes (1) selon l'une quelconque des revendications précédentes, l'agencement (12) d'appui sur roues comportant une poutre centrale (17) franchissant transversalement le sommet du bâti porteur (5) de fût roulant et deux bras (19) suspendus vers le bas qui sont couplés de façon mobile, idéalement couplés de façon pivotante, au bâti porteur (5) de fût roulant et une roue (14) étant montée de façon mobile au niveau ou autour de l'extrémité libre de chaque bras suspendu vers le bas de l'agencement (12) d'appui sur roues, les bras (19) suspendus vers le bas étant des poutres curvilignes.

12. Rouleau brise-mottes (1) selon l'une quelconque des revendications précédentes, le bâti porteur (5) de fût roulant comportant un berceau quadrangulaire comportant deux poutres longitudinales (21) s'étendant le long des parties de bords longitudinaux opposés du fût roulant (4) et les deux poutres longitudinales (21) étant reliées par deux plaques porteuses (23, 24) d'extrémités franchissant transversalement les faces d'extrémités latitudinales du fût roulant (4), les deux plaques porteuses (23, 24) d'extrémités étant dotées de moyens de soutien servant à soutenir un axe de fût roulant, les moyens de soutien sur les deux plaques porteuses (23, 24) d'extrémités étant des roulements à rouleaux, les deux plaques porteuses (23, 24) d'extrémités étant renforcées à l'emplacement de montage des roulements à rouleaux pour guider en rotation l'axe du fût roulant (4).

13. Rouleau brise-mottes (1) selon la revendication 12, le bâti porteur (5) de fût roulant comportant un pont (26) de soutien structural, idéalement en arc, franchissant transversalement le sommet du fût roulant (4), idéalement au niveau ou autour du centre du bâti porteur (5) de fût roulant entre les deux poutres longitudinales (21), le moyen (6) de traction étant couplé de façon mobile, idéalement de façon pivotante, au pont (26) de soutien structural, le moyen (6) de traction s'étendant à partir du bâti porteur (5) de fût roulant à une hauteur et un angle suffisants pour être écarté de la partie supérieure des roues (14) lorsque les roues (14) sont dans une position déployée de transport et que le rouleau brise-mottes (1) est en cours de déplacement entre la position de transport et l'orientation de travail.

14. Rouleau brise-mottes (1) selon l'une quelconque des revendications précédentes, le moyen (6) de traction comportant une première partie dotée d'une première poutre allongée (31) qui est couplée de façon mobile, idéalement de façon pivotante, au bâti porteur (5) de fût roulant, le moyen (6) de traction comportant une seconde partie dotée d'une seconde poutre allongée (32) inclinée vers le bas par rapport à la première poutre allongée (31) en direction d'un attelage de traction du véhicule tracteur motorisé et qui peut être couplée de façon détachable à celui-ci.

15. Rouleau brise-mottes (1) selon l'une quelconque des revendications précédentes, le moyen (6) de traction et le moyen primaire (7) d'actionnement motorisé étant couplés de façon pivotante à un pont (26) de soutien structural en arc franchissant transversalement le sommet du fût roulant (4).
